Europäisches Patentamt

European Patent Office

Office européen des brevets

(11) Veröffentlichungsnummer: **0 456 983 A2**

# (12) EUROPÄISCHE PATENTANMELDUNG

(21) Anmeldenummer: **91103727.3**

(22) Anmeldetag: **12.03.91**

(51) Int. Cl.5: **B60G 3/02**, B60G 15/02, F16F 9/30, F16F 3/10

(30) Priorität: **17.03.90 DE 9003153 U**

(43) Veröffentlichungstag der Anmeldung: **21.11.91 Patentblatt 91/47**

(84) Benannte Vertragsstaaten: **DE ES FR GB IT**

(71) Anmelder: **Kober, Herbert**
**Ichenhausener Strasse 12**
**W-8871 Kötz(DE)**

(72) Erfinder: **Kober, Herbert**
**Ichenhausener Strasse 12**
**W-8871 Kötz(DE)**

(74) Vertreter: **Munk, Ludwig, Dipl.-Ing.**
**Patentanwalt Prinzregentenstrasse 1**
**W-8900 Augsburg(DE)**

(54) **Fahrzeug.**

(57) Bei einem Fahrzeug, insbesondere Anhänger wie Kfz-Anhänger, mit wenigstens zwei gefedert angeordneten Rädern (3), die mittels jeweils einer Schwinge (4),die entgegen der Kraft der Federungseinrichtung ausrichtbar ist, mit der Fahrzeugchassis (2) verbunden sind, lassen sich dadurch ein einfacher und kostengünstiger Aufbau sowie ein hoher Fahrkomfort gewährleisten, daß jede Schwinge (4) selbst als mit einer Dämpfungseinrichtung (9) versehenes Federungselement ausgebildet ist, das am Fahrzeugchassis (2) fixierbar ist und auf dem das zugeordnete Rad (3) aufnehmbar ist.

FIG 1

EP 0 456 983 A2

Die Erfindung betrifft ein Fahrzeug, insbesondere einen Anhänger wie Kfz-Anhänger, mit wenigstens zwei gefedert angeordneten Rädern, die mittels jeweils einer Schwinge, die entgegen der Kraft der Federungseinrichtung auslenkbar ist, mit der Fahrzeugchassis verbunden sind.

Ein Kfz-Anhänger dieser Art ist aus der CH-PS 206 336 bekannt. Bei dieser bekannten Anordnung sind die Schwingen als schwenkbar am Fahrzeugchassis gelagerte Hohlkörper ausgebildet. In diesen befindet sich jeweils eine Blattfeder, die einerseits an einem das Schwingenlager bildenden Zapfen der Fahrzeugchassis befestigt ist und andererseits mit der zugehörigen Schwinge zusammenwirkt. Anordnungen dieser Art erweisen sich als vergleichsweise aufwendig und wartungsintensiv. Außerdem ergibt sich auch ein vergleichsweise hohes Baugewicht. Ein ganz besonderer Nachteil ist jedoch darin zu sehen, daß hier keinerlei Dämpfung vorhanden ist. Es kann daher zu Resonanzerscheinungen kommen. Die bekannte Anordnung erweist sich demnach als nicht funktionstauglich und wirtschaftlich genug.

Hiervon ausgehend ist es daher die Aufgabe der vorliegenden Erfindung, eine Anordnung eingangs erwähnter Art zu schaffen, die vergleichsweise einfach und kostengünstig aufgebaut ist und die dennoch einen hohen Fahrkomfort gewährleistet.

Diese Aufgabe wird erfindungsgemäß dadurch gelöst, daß die Schwinge selbst als mit einer Dämpfungseinrichtung versehenes Federungselement ausgebildet ist, das am Fahrzeug fixierbar ist und auf dem das zugeordnete Rad aufnehmbar ist.

Mit diesen Maßnahmen werden die obengeschilderten Nachteile des gattungsgemäßen Standes der Technik vollständig beseitigt. Insbesondere für leichtere Fahrzeuge wie kleinere Kfz-Anhänger, stellen die erfindungsgemäßen Maßnahmen eine höchst wirtschaftliche und dennoch zuverlässige und allen Anforderungen gerecht werdende Lösung dar.

Gemäß einer besonders zu bevorzugenden, vorteilhaften Ausgestaltung der übergeordneten Maßnahmen kann das die Schwinge bildende Federungselement als mehrschichtiges Sandwichelement ausgebildet sein, das wenigstens eine aus gummielastischem Material bestehende Dämpfungsschicht aufweist, die auf wenigstens einem aus Federmaterial, vorzugsweise Federstahl, bestehenden Wandelement aufgenommen ist. Bei einer derartigen Verbundbauweise kommen die vorteilhaften Eigenschaften beider Materialien vorteilhaft zum tragen. Das Federmaterial gewährleistet eine hohe Tragfähigkeit mit guten Federungseigenschaften, das gummielastische Material, das im Federungsfalle einem Walkprozeß unterliegt, gewährleistet infolge seiner Hystereseeigenschaften eine ausgezeichnete Dämpfung. Gleichzeitig ergeben sich infolge der erfindungsgemäßen Sandwichbauweise auch eine einfache und rationelle Herstellbarkeit sowie Lagerhaltung und Montage.

Sofern die auftretenden Kräfte es erfordern sollten, kann das erfindungsgemäße Sandwichelement ohne weiteres zwei oder mehr Wandelemente enthalten, zwischen denen jeweils eine aus gummielastischem Material bestehende Dämpfungsschicht angeordnet ist. Es wäre auch denkbar, die Wandelemene durch Profilschienen zu bilden, deren Profilinnenraum mit gummielastischem Material ausgefüllt ist.

Gemäß weiterer Fortbildung der übergeordneten Maßnahmen kann das gummielastische Material an das zugeordnete Wandelement bzw. die zugeordneten Wandelemente anvulkanisiert sein. Hierdurch ergibt sich eine zuverlässige, gegenseitige Verbindung, über die hohe Quer- bzw. Scherkräfte übertragen werden können und die dementsprechend zu einer zuverlässigen Walkung des gummielastischen Materials führt.

Gemäß einer weiteren vorteilhaften Ausgestaltung können das Wandelement bzw. die Wandelemente und die Gummischicht bzw. -schichten formschlüssig ineinander eingreifen. Hierzu können die Wandelemente Ein- bzw. Ausbuchtungen und/oder Ausnehmungen aufweisen. Diese Maßnahmen können in vorteilhafter Weise zu einer besonders intensiven Walkung des gummielastischen Materials und dementsprechend zu einer besonders guten Dämpfung führen. Gleichzeitig ergibt sich infolge des gegenseitigen Formschlusses eine Entlastung im Bereich der gegenseitigen Vulkanisationsnaht.

Eine weitere zweckmäßige Fortbildung kann darin bestehen, daß wenigstens ein Wandelement an seinen Enden mit die Gummischicht überragenden Haltern versehen ist, an/denen chassis- bzw. radseitige Tragelemente vorzugsweise lösbar festlegbar sind. Diese Maßnahmen ergeben eine einfache Montage- bzw. Demontage und ermöglichen dementsprechend auch eine einfache Wartung.

Eine weitere zweckmäßige Maßnahme kann darin bestehen, daß die Schwingen bezüglich ihrer Längsachse verwunden bzw. verwindbar sind. Hierbei läßt sich dementsprechend eine gewisse Drehstabwirkung erreichen, durch welche die bei Beladung auftretenden Seitenmomente auf einfache Weise ausgleichbar sind.

Weitere zweckmäßige Fortbildungen und vorteilhafte Ausgestaltungen der übergeordneten Maßnahmen ergeben sich aus den restlichen Unteransprüchen sowie der nachstehenden Beschreibung einiger Ausführungsbeispiele anhand der Zeichnung.

In der Zeichnung zeigen:

Figur 1     eine Draufsicht auf einen erfindungsgemäßen Kfz-Anhänger,

Figur 2     einen Längsschnitt durch eine erfindungsgemäße Schwinge in Sandwichbauweise,

Figur 3     einen Längsschnitt durch eine modifizierte Ausführung und

Figur 4     eine Frontteilansicht der Anordnung gemäß Figur 1.

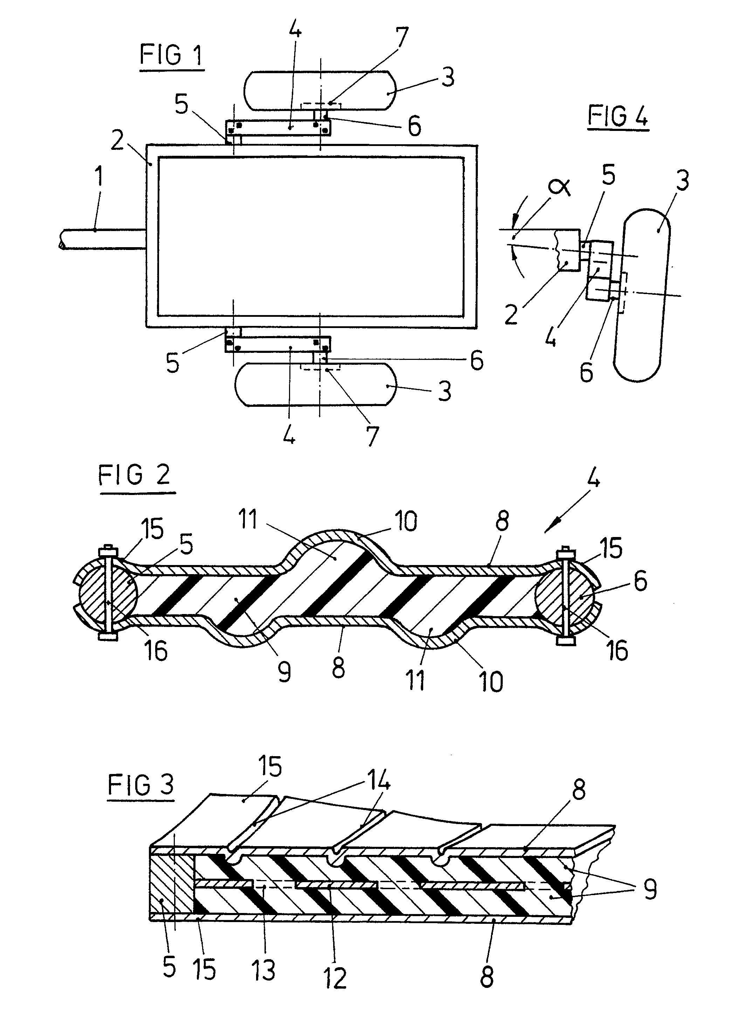

Der der Figur 1 zugrundeliegende, schematisch dargestellte Kfz-Anhänger besteht aus einer mit einer Deichsel 1 versehenen Chassis 2, die auf einem Fahrwerk mit zwei seitlich angeordneten Rädern 3 aufgenommen ist. Die Räder 3 sind über jeweils eine zugeordnete Schwinge 4 mit der Chassis 2 verbunden. Die die Chassis 2 seitlich flankierenden Schwingen 4 sind mit ihrem chassisseitigen Ende an einem chassisseitigen Tragelement, hier in Form eines seitlich vorstehenden Tragstutzens 5 befestigt. Im Falle eines durchgehenden Querbalkens könnten die Schwingen 4 auch einfach an den seitlich vorstehenden Enden des Querbalkens befestigt sein oder dergleichen. An ihrem gegenüberliegenden, unteren Ende tragen die Schwingen 4 jeweils einen an ihnen befestigten Achszapfen 6, auf dem die Nabe 7 des jeweils zugeordneten Rads 3 gelagert ist.

Die am Chassis 2 fixierten und jeweils ein Rad 3 tragenden Schwingen 4 sind als Federungselemente ausgebildet, durch die auf die Räder 3 wirkende Stöße aufgefangen und gedämpft werden können. Hierzu können die Schwingen 4 als Stahlfedern ausgebildet sein, denen eine Dämpfungseinrichtung zugeordnet oder in die eine Dämpfungseinrichtung integriert ist. Derartige Ausführungen liegen den Figuren 2 und 3 zugrunde. Hierbei sind die Schwingen 4 als in Sandwichbauweise gestaltete Federstahl-Gummimaterial, Verbundkörper ausgebildet. Das gummielastische Material kann dabei durch Vulkanisation mit dem Federstahl verbunden sein. Aber auch eine Kleb- bzw. Reibverbindung wäre denkbar. In einfachen Fällen kann ein derartiger Verbundkörper aus einem ebenen oder profilierten Wandelement 8, etwa in Form eines Abschnitts einer entsprechend profilierten Federstahlschiene, und einer hieran angebrachten Dämpfungsschicht 9 aus gummielastischem Material bestehen. Im Falle einer Federbewegung des Wandelements 8 unterliegt der Gummi der unverschiebbar mit dem Wandelement 8 verbundenen Dämpfungsschicht 9 einer sogenannten Walkung, die in Form der Hystereseeigenschaften des gummielastischen Materials die erwünschte Dämpfung bewirkt.

Bei der Ausführung gemäß Figur 2 sind zwei mit Abst-and einander gegenüberliegende Wandelemente 8 vorgesehen, zwischen denen eine einvulkanisierte Dämpfungsschicht 9 aus gummielastischem Material vorgesehen ist. Zur Intensivierung des Walkvorgangs sind die Wandelemente 8 hier mit quer zur Schwingenlängsrichtung angeordneten Ausbuchtungen 10 versehen, in welche das gummielastische Material der Dämpfungsschicht 9 in Form von leistenartigen Vorsprüngen 11 eingreift. Hierdurch ergibt sich eine gegenseitige Verzahnung und dementsprechend ein gegenseitiger Formschluß, durch den die Vulkanisationsnaht entlastet und der Grad der Walkung erhöht werden. Im dargestellten Beispiel sind die einander gegenüberliegenden Wandelemente 8 mit in Längsrichtung gegeneinander versetzten Ausbuchtungen 10 versehen. Selbstverständlich könnten diese auch einander gegenüberliegend angeordnet sein. In einfachen Fällen genügt eine Ausbuchtung 10, die im Falle des oberen Wandelements 8 der Figur 2 angedeutet ist. Es können aber auch mehrere derartige Ausbuchtungen 10 vorgesehen sein, wie in Figur 2/anhand des unteren Wandelements 8 gezeigt ist.

Anstelle von Ausbuchtungen könnten auch andere Formgebungsmaßnahmen, beispielsweise Einbuchtungen oder Ausnehmungen vorgesehen sein, wie am besten aus Figur 3 erkennbar ist.

Das der Figur 3 zugrundeliegende Sandwichelement besteht aus drei Federstahlelementen in Form von zwei äußeren Wandelementen 8 und einem Zwischenwandelement 12, zwischen denen jeweils eine aus gummielastischem Material bestehende Dämpfungsschicht 9 angeordnet ist. Insgesamt ergibt sich somit hier ein fünfschichtiger Aufbau. Das Mittelwandelement 12 ist mit Ausnehmungen 13 versehen, durch welche das gummielastische Material hindurchgreifen kann, womit sich eine gegenseitige Verzahnung ergibt. Die äußeren Wandelemente 8 können wiederum mit Aus- bzw. Einbuchtungen bzw. ebenfalls mit Ausnehmungen versehen sein. Hier ist das obere Wandelement 8 mit Einbuchtungen 14 versehen, die in Form quer zur Schwingenlängsrichtung verlaufender Leisten in das gummielastische Material der benachbarten Dämpfungsschicht 9 eingreifen und damit eine gegenseitige Verzahnung zur Erhöhung des Walkeffekts ergeben. In vielen Fällen wird es jedoch ausreichen, wenn das Wandelement bzw. die Wandelemente einfach als ebene, unprofilierte Flachschienen ausgebildet sind, wie dies in Figur 3 unten angedeutet ist.

Eines der äußeren Wandelemente 8, bei den Ausführungen gemäß Figuren 2 und 3 jeweils beide äußeren Wandelemente 8, sind an ihren Enden mit die aus gummielastischem Material bestehende Dämpfungsschicht 9 überragenden Haltelaschen 15 versehen, die zur Befestigung der Schwingen 4 an den chassisseitigen Tragzapfen 5 bzw. zur Aufnahme der Achszapfen 6 dienen. Diese Haltelaschen 15 sind bei der Ausführung gemäß Figur 2 als an den Querschnitt der Tragzapfen 5 bzw. Achszapfen 6 angeformte Klauen ausgebildet, die das jeweils zugeordnete Tragelement teilweise umgreifen. Zur Bewerkstelligung der gewünschten Fixierung kann dabei einfach eine Schraubverbindung mit durchgehenden Schrauben 16 vorgesehen sein. Diese gewährleisten zudem eine leichte Lösbarkeit.

Zum Ausgleich der bei Beladung des Fahrzeugs auftretenden Seitenmomente um die Längsachse der Schwingen 4 können diese mit geeignetem Sturz angeordnet sein, der Art, daß die Räder 3 im unbeladenen Zustand leicht nach außen geneigt sind, wie am besten aus Figur 4 erkennbar ist. Hierzu können einfach die chassisseitigen Tragzapfen 5 gegenüber der Rahmenebene der Chassis 2 schräg nach unten geneigt sein, wie in Figur 4 bei α angedeutet ist. In einem derartigen Fall werden die Seitenmomente durch entsprechende Verwindung der Schwingen 4 aufgenommen. Diese fungieren dementsprechend diesbezüglich als eine Art Drehstabfeder. Es wäre auch denkbar, die Schwingen 4 von Anfang an bezüglich ihrer Längsachse verwunden auszubilden. Eine derartige Ausführung liegt der Figur 3 zugrunde. In einem derartigen Fall könnten die chassisseitigen Achszapfen 5 parallel zur chassisseitigen Rahmenebene angeordnet sein. Im Beladungszustand würde dabei die Verwindung infolge der Drehstabfederwirkung rückgängig gemacht.

**Patentansprüche**

1. Fahrzeug, insbesondere Anhänger wie Kfz-Anhänger, mit wenigstens zwei gefedert angeordneten Rädern (3), die mittels jeweils einer Schwinge (4), die entgegen der Kraft der Federungseinrichtung ausrichtbar ist, mit der Fahrzeugchassis (2) verbunden sind, dadurch gekennzeichnet, daß jede Schwinge (4) selbst als mit einer Dämpfungseinrichtung (9) versehenes Federungselement ausgebildet ist, das am Fahrzeugchassis (2) fixierbar ist und auf dem das zugeordnete Rad (3) aufnehmbar ist.

2. Fahrzeug nach Anspruch 1, dadurch gekennzeichnet, daß die Schwinge (4) als mehrschichtiges Sandwichelement ausgebildet ist, das wenigstens eine aus gummielastischem Material bestehende Dämpfungsschicht (9) aufweist, die auf wenigstens einem aus Federmaterial, vorzugsweise Federstahl, bestehenden Wandelement (8) aufgenommen ist.

3. Fahrzeug nach Anspruch 2, dadurch gekennzeichnet, daß wenigstens zwei äußere Wandelemente (8) vorgesehen sind, die zwischen sich wenigstens eine Dämpfungsschicht (9) aufnehmen.

4. Fahrzeug nach einem der vorhergehenden Ansprüche 2 oder 3, dadurch gekennzeichnet, daß wenigstens ein weiteres Zwischenwandelement (12) vorgesehen ist, das beidseitig von einer Gummischicht (9) flankiert ist.

5. Fahrzeug nach einem der vorhergehenden Ansprüche, dadurch gekennzeichnet, daß die aus gummielastischem Material bestehende Dämpfungsschciht (9) einvulkanisiert ist.

6. Fahrzeug nach einem der vorhergehenden Ansprüche 2 bis 5, dadurch gekennzeichnet, daß wenigstens ein Wandelement (8), vorzugsweise die zwei äußeren Wandelemente (8), an den Enden mit die benachbarte Dämpfungsschicht (9) überragenden Haltern, vorzugsweise in Form von Haltelaschen (15), versehen ist bzw. sind, an denen chassis- bzw. radseitige Tragelemente (5, 6) vorzugsweise lösbar festlegbar sind.

7. Fahrzeug nach einem der vorhergehenden Ansprüche 2 bis 6, dadurch gekennzeichnet, daß zumindest eine Dämpfungsschicht (9) und ein benachbartes Wandelement (8) formschlüssig ineinander eingreifen.

8. Fahrzeug nach Anspruch 7, dadurch gekennzeichnet, daß wenigstens ein Wandelement (8), vorzugsweise die äußeren Wandelemente (8), wenigstens eine quer zur Längsrichtung zur Schwinge (4) verlaufende Ausbuchtung (10) und/oder Einbuchtung (14) aufweist bzw. aufweisen, welche mit dem gummielastischen Material in Form von Nut und Feder im Eingriff ist.

9. Fahrzeug nach Anspruch 7, dadurch gekennzeichnet, daß wenigstens ein Wandelement, vorzugsweise ein Zwischenwandelement (12), mit vom gummielastischen Material der benachbarten Dämpfungsschicht bzw. Dämpfungsschichten (9) durchgriffenen Ausnehmungen (13) versehen ist.

10. Fahrzeug nach wenigstens einem der vorhergehenden Ansprüche, dadurch gekennzeichnet, daß die Achse des chassisseitigen Tragelements (5), an welcher eine Schwinge (4), die bezüglich ihrer Längsachse verwunden bzw. verwindbar ist, starr festlegbar ist, gegenüber der chassisseitigen Rahmenebene schräg nach unten geneigt ist.

FIG 1

FIG 4

FIG 2

FIG 3